# EUROPEAN PATENT APPLICATION

(11) **EP 4 486 051 A1**
(43) Date of publication of application: **01.01.2025**
(21) Application number: 22927758.7
(22) Date of filing: 25.02.2022
(51) Int. Cl.: H04W 76/28, H04W 52/02

(54) **COMMUNICATION METHOD AND TERMINAL DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: RGTH
(86) International application number: PCT/CN2022/077930
(87) International publication number: WO 2023/159472

(57) **Abstract**

A communication method and a terminal device are provided. The method includes: performing, by a terminal device, radio resource management RRM measurement through a wake-up receiver WUR to obtain a first RRM measurement result. Power consumption of the terminal device performing RRM measurement based on the WUR is less than that of the terminal device performing RRM measurement based on a primary receiver. Therefore, the problem of high power consumption required for the terminal device to perform RRM measurement based on the primary receiver in the conventional RRM measurement method is avoided.

## Description

### TECHNICAL FIELD

This application relates to the field of communication technologies, and more specifically, to a communication method and a terminal device.

### BACKGROUND

Currently, in a process of a terminal device performing radio resource management (radio resource management, RRM) measurement, the terminal device receives a synchronization signal and physical broadcast channel block (synchronization signal and physical broadcast channel block, SSB) and/or a channel state information reference signal (channel state information-reference signal, CSI-RS) through a primary receiver, and obtains an RRM measurement result based on the received SSB and/or CSI-RS. Such an RRM measurement method results in relatively high power consumption required by the terminal device to perform the RRM measurement.

### SUMMARY

This application provides a communication method and a terminal device, to reduce power consumption required by the terminal device to perform RRM measurement.

According to a first aspect, a communication method is provided. The method includes: performing, by a terminal device, radio resource management RRM measurement through a wake-up receiver WUR to obtain a first RRM measurement result.

According to a second aspect, a terminal device is provided. The terminal device includes: a processing unit, configured to perform radio resource management RRM measurement through a wake-up receiver WUR to obtain a first RRM measurement result.

According to a third aspect, a terminal is provided. The terminal includes a processor, a memory, and a communications interface. The memory is configured to store one or more computer programs, and the processor is configured to invoke the computer program in the memory to cause the terminal device to perform some or all of the steps in the method according to the first aspect.

According to a fourth aspect, an embodiment of this application provides a communications system. The system includes the foregoing terminal and/or a network device. In another possible design, the system may further include other devices that interact with the terminal or the network device in the solutions provided in embodiments of this application.

According to a fifth aspect, an embodiment of this application provides a computer-readable storage medium, where the computer-readable storage medium stores a computer program, and the computer program causes a terminal to perform some or all of the steps in the method according to the first aspect.

According to a sixth aspect, an embodiment of this application provides a computer program product, where the computer program product includes a non-transitory computer-readable storage medium that stores a computer program, and the computer program is operable to cause a terminal to perform some or all of the steps of the method according to the first aspect. In some implementations, the computer program product may be a software installation package.

According to an eighth aspect, an embodiment of this application provides a chip. The chip includes a memory and a processor, and the processor may invoke a computer program from the memory and run the computer program, to implement some or all of the steps described in the method according to the first aspect or the second aspect.

The terminal device performs RRM measurement through the WUR to obtain the first RRM measurement result. Power consumption of the terminal device performing RRM measurement based on the WUR is less than that of the terminal device performing RRM measurement based on a primary receiver. Therefore, the problem of high power consumption required for the terminal device to perform RRM measurement based on the primary receiver in the conventional RRM measurement method is avoided. The solution in embodiments of this application facilitates reduction of power consumption required for the terminal device to perform RRM measurement.

### BRIEF DESCRIPTION OF DRAWINGS

FIG. 1 shows a wireless communications system 100 to which an embodiment of this application is applied.
FIG. 2 is a schematic diagram of a terminal device carrying a WUR.
FIG. 3 is a schematic flowchart of a communication method according to an embodiment of this application.
FIG. 4 is a schematic diagram of a terminal device according to an embodiment of this application.
FIG. 5 is a schematic diagram of a structure of a communications apparatus according to an embodiment of this application.

### DESCRIPTION OF EMBODIMENTS

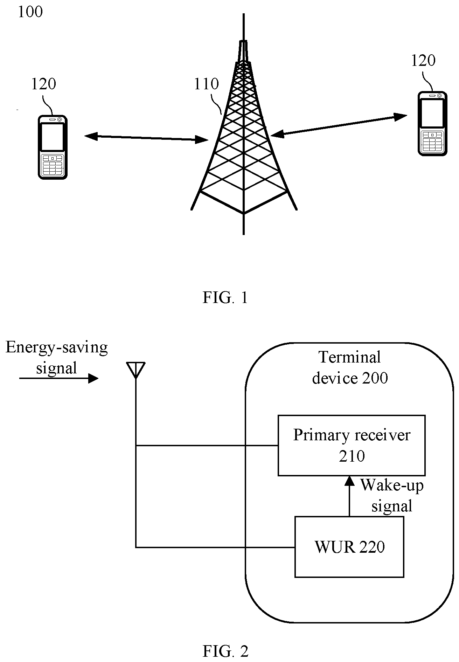

The technical solutions in this application are described below with reference to the accompanying drawings. For a better understanding of this application, a communications system to which an embodiment of this application is applied is first described below with reference to FIG. 1.

FIG. 1 shows a wireless communications system 100 to which an embodiment of this application is applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage area.

FIG. 1 illustratively shows one network device and two terminals. Optionally, the wireless communications system 100 may include a plurality of network devices, and another quantity of terminal devices may be included in a coverage range of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be used to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without the relay of a communication signal through a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or replace with the following names, for example: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks of the same or different access technologies. A specific technology and a specific device form used by the network device are not limited in embodiments of this application.

The base station may be fixed or mobile. For example, a helicopter or an unmanned aerial vehicle may be configured to serve as a mobile base station, and one or more cells may move according to a location of the mobile base station. In other examples, a helicopter or an unmanned aerial vehicle may be configured to serve as a device in communication with another base station.

In some deployments, the network device in embodiments of this application may be a CU or a DU, or the network device includes a CU and a DU. A gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of a communications device in this application may also be implemented by software functions running on hardware, or by virtualization functions instantiated on a platform (for example, a cloud platform).

For ease of understanding, communication processes involved in embodiments of this application are described below.

### Radio resource control (radio resource control, RRC) state and mobility management

Currently, the protocol defines three RRC states of a terminal device: an RRC connected (RRC_connected) state, an RRC idle (RRC-idle) state, and an RRC inactive (RRC-inactive) state.

The RRC connected state may be a state of the terminal device after completing a random access procedure but before performing an RRC release. An RRC connection exists between the terminal device and a network device (for example, an access network device). In the RRC connected state, data transmission, such as downlink data transmission and/or uplink data transmission, can be performed between the terminal device and the network device. Alternatively, transmission of a data channel and/or control channel specific to the terminal device can be performed between the terminal device and the network device, to transmit specific information or unicast information of the terminal device.

In the RRC connected state, the network device can determine cell-level location information of the terminal device; that is, the network device can determine a cell to which the terminal device belongs. In the RRC connected state, after the terminal device moves, for example, from one cell to another, the network device can control the terminal device to perform cell handover (handover). It can be learned that mobility management of the terminal device in the RRC connected state may include cell handover. In addition, the mobility management of the terminal device in the RRC connected state may be controlled by the network device. Accordingly, the terminal device may be handed over to a designated cell according to an instruction issued by the network device.

The RRC connected state is a state of the terminal device when the terminal device camps on a cell but does not perform random access. The terminal device usually enters the RRC connected state after being powered on or after an RRC release. In the RRC connected state, there is no RRC connection between the terminal device and the network device (for example, a network device camped on by the terminal device), the network device does not store a context of the terminal device, and no connection is established for the terminal device between the network device and a core network. If the terminal device needs to enter the RRC connected state from the RRC idle state, it is required to initiate an RRC connection establishment process.

In the RRC idle state, the core network (core network, CN) may send a paging message to the terminal device; that is, a paging process may be triggered by the CN. Optionally, a paging area may also be configured by the CN. In some cases, for a terminal device in an RRC idle state, after the terminal device moves (for example, from one cell to another), the terminal device may initiate a cell reselection (cell reselection) process. In some other cases, for a terminal device in an RRC idle state, when the terminal device needs to access a cell, the terminal device may initiate a cell selection (cell selection) process. In other words, mobility management of the terminal device in the RRC idle state may include cell reselection and/or cell selection.

The RRC inactive state is a state defined to reduce air interface signalling, quickly restore wireless connections, and quickly restore data services. The RRC inactive state is a state between the connected state and the idle state. The terminal device has previously entered the RRC connected state and then released the RRC connection with the network device, but the network device has stored the context of the terminal device. In addition, the connection established for the terminal device between the network device and the core network has not been released. In other words, a user plane bearer and a control plane bearer between the RAN and the CN are still maintained; that is, there is a CN-NR connection.

In the RRC inactive state, the RAN may send a paging message to the terminal device; that is, a paging process may be triggered by the RAN. An RAN-based paging area is managed by the RAN, and a location of the terminal device that can be learned by the network device is at the level of the RAN-based paging area.

In some cases, for a terminal device in an RRC inactive state, after the terminal device moves (for example, from one cell to another), the terminal device may initiate a cell reselection procedure. In some other cases, for a terminal device in an RRC inactive state, when the terminal device needs to access a cell, the terminal device may initiate a cell selection procedure. In other words, mobility management of the terminal device in the RRC inactive state may include cell reselection and/or cell selection.

Whether it is cell selection, cell handover, or cell reselection, it can be performed based on an RRM measurement result of RRM measurement. For example, when the RRM measurement result is greater than an RRM measurement threshold, the terminal device can perform cell selection, cell handover, or cell reselection. RRM measurement is mainly described below.

### RRM measurement

RRM measurement is a type of mobility measurement. As described above, whether it is cell selection, cell handover, or cell reselection, it can be performed based on the RRM measurement result. Therefore, mobility measurement can be understood as the basis of mobility management. In other words, the purpose of RRM measurement is to implement radio resource management, where the radio resource management may include the mobility management mentioned above and/or an RRM measurement relaxation mechanism mentioned below. In some implementations, the terminal device may perform RRM measurement on an SSB and/or a CSI-RS sent by the network device to obtain an RRM measurement result.

The types of RRM measurement include intra-frequency measurement and inter-frequency/inter-system (inter-RAT) measurement. The intra-frequency measurement includes measurement of other frequencies in the same frequency band of a current serving cell and neighboring cell frequencies that are the same as a center frequency of a frequency band supported by the serving cell. The inter-frequency/inter-system measurement includes measurement of neighboring cell frequencies that are different from the center frequency band of the frequency band supported by the serving cell, or measurement of neighboring cell frequencies that are not in the same system as the serving cell.

When the terminal device is in the RRC idle state or the RRC inactive state, there is no RRC connection between the terminal device and the network device. When an RRM measurement result of a cell on which the terminal device camps (also called a serving cell) is lower than a specific threshold (that is, the RRM measurement threshold mentioned above), the terminal device may perform RRM measurement on the serving cell and a cell adjacent to the serving cell (also called a neighboring cell) based on intra-frequency, inter-frequency and/or inter-system neighboring cell information configured by the network device in a system message, and determine whether the RRM measurement of the neighboring cell meets a cell reselection condition. If an RRM measurement result of the neighboring cell meets the cell reselection condition, the terminal device camps on the neighboring cell. When the terminal device is in the RRC connected state, there is an RRC connection between the terminal device and the network device. The network device configures, through RRC signalling, the terminal device to perform intra-frequency, inter-frequency and/or inter-system neighboring cell measurement. The terminal device reports the RRM measurement of the serving cell and the neighboring cell to the network device through RRC signalling, so that the network device can hand over the terminal device to a cell with a better RRM measurement result based on measurement results of the terminal device.

It should be noted that the RRM measurement result is used to indicate communication quality of the terminal device. In some implementations, the RRM measurement result may include one or more of the following measurement quantities: signal amplitude (Srxlev), signal strength (Squal), reference signal received power (reference signal received power, RSRP), reference signal received quality (reference signal received quality, RSRQ), signal to noise ratio (signal to noise ratio, SNR), signal to interference plus noise ratio (signal to interference plus noise ratio, SINR), received signal strength indication (received signal strength indication, RSSI), and the like.

It should be noted that measurement quantities included in a "first RRM measurement result" and/or a "second RRM measurement result" mentioned in embodiments of this application may be of the same types as those included in the RRM measurement result described above.

In addition, the RRM measurement threshold described above may include an intra-frequency measurement threshold (Sintrasearch) and an inter-frequency/inter-system measurement threshold (Snonintrasearch).

In some implementations, the intra-frequency measurement threshold may include an intra-frequency measurement signal amplitude threshold (SintrasearchP) and an intra-frequency measurement signal strength threshold (SintrasearchQ). SintrasearchP is used to indicate a signal amplitude threshold of the intra-frequency measurement. SintrasearchQ is used to indicate a signal strength threshold of the intra-frequency measurement.

In some other implementations, the inter-frequency/inter-system measurement threshold may include an inter-frequency/inter-system measurement signal amplitude threshold (SnonintrasearchP) and an inter-frequency/inter-system measurement signal strength threshold (SnonintrasearchQ). SnonintrasearchP is used to indicate a signal amplitude threshold of the inter-frequency/inter-system measurement. SnonintrasearchQ is used to indicate a signal strength threshold of the inter-frequency/inter-system measurement.

It should be noted that measurement thresholds included in a "first RRM measurement threshold" and/or a "second RRM measurement threshold" mentioned in embodiments of this application may be of the same types as those included in the first RRM measurement threshold described above.

After the terminal device obtains the RRM measurement result, the terminal device may further perform a first operation based on the RRM measurement result. The first operation may include one or more of cell handover described above, cell reselection, cell selection, RRM measurement relaxation described below, supplementary uplink (supplementary uplink, SUL) carrier switching, or switching between a 2-step random access procedure and a 4-step random access procedure.

Some protocols specify that a terminal device needs to perform RRM measurement periodically, which results in high energy consumption of the terminal device. Especially in some measurement scenarios (for example, when the terminal device is stationary or the terminal device is moving at a low speed), it is not necessary for the terminal device to perform RRM measurement frequently. Therefore, in order to reduce the energy consumption of the terminal device, an RRM measurement power saving mechanism and an RRM measurement relaxation (RRM measurement relax) mechanism are introduced.

### RRM measurement power saving mechanism

RRM measurement rules followed by a terminal device in an RRC connected state when performing intra-frequency measurement and inter-frequency/inter-system measurement are separately described below.

In the scenario of intra-frequency measurement, if an RRM measurement result of a serving cell meets Srxlev > SIntraSearchP and Squal > SIntraSearchQ, the terminal device may choose not to perform intra-frequency measurement; otherwise, the terminal device needs to perform intra-frequency measurement.

In the scenario of inter-frequency/inter-system measurement, if the RRM measurement result of the serving cell meets Srxlev > SnonIntraSearchP and Squal > SnonIntraSearchQ, the terminal device may choose not to perform inter-frequency/inter-system measurement; otherwise, the terminal device needs to perform inter-frequency/inter-system measurement.

The RRM measurement rules followed by the terminal device in the RRC connected state are described above. RRM measurement rules followed by a terminal device in an RRC idle state or an RRC non-connected state are described below.

The terminal device in the RRC connected state may perform RRM measurement based on an S-measure (S-measure) criterion, where if an RRM measurement result obtained by the terminal device performing RRM measurement is greater than the RRM measurement threshold, the terminal device only needs to perform RRM measurement for the serving cell, without performing RRM measurement outside the serving cell; otherwise, if the RRM measurement result obtained by the terminal device performing the RRM measurement is less than or equal to the RRM measurement threshold, the terminal device performs RRM measurement according to a configuration of a measurement object (measurement object, MO).

In some implementations, in the S-measure criterion, the terminal device may perform RRM measurement based on a synchronization and physical broadcast channel block (synchronization/physical broadcast channel block, SSB) and/or a channel state information reference signal (channel state information-reference signal, CSI-RS).

### RRM measurement relaxation mechanism

RRM measurement relaxation may also be referred to as neighboring cell measurement relaxation or neighboring cell RRM measurement relaxation. There are many ways to implement RRM measurement relaxation. For example, the terminal device may implement RRM measurement relaxation by increasing an RRM measurement periodicity (that is, reducing the number of RRM measurements). For another example, the terminal device may implement RRM measurement relaxation by reducing the number of measured neighboring cells. For still another example, the terminal device may implement RRM measurement relaxation by reducing the number of measured frequencies.

For RRM measurement relaxation of the terminal device in the RRC idle state and the RRC inactive state, the protocol defines two criteria, namely, a not-cell-edge (not-cell-edge) criterion and a low-mobility (low-mobility) criterion. The terminal device may determine whether it meets the not-cell-edge criterion and/or the low-mobility criterion based on the RRM measurement result. When the terminal device meets the not-cell-edge criterion and/or the low-mobility criterion, the terminal device may perform RRM measurement relaxation.

The not-cell-edge criterion is mainly used to determine whether the terminal device is located at an edge cell position of the serving cell. If the terminal device is located at a non-edge cell position of the serving cell, the terminal device has a little need for cell reselection and may perform RRM measurement relaxation to achieve energy saving of the terminal device. If the terminal device is located at an edge cell position of the serving cell, the terminal device has a great need for cell reselection, and the terminal device may not perform RRM measurement relaxation.

The not-cell-edge criterion mainly defines the RRM measurement threshold. By comparing the RRM measurement result with the RRM measurement threshold, it can be determined whether the terminal device is located at the non-edge cell position. For example, if the RRM measurement result is greater than the RRM measurement threshold, it indicates that the terminal device is located at the non-edge cell position of the serving cell; and if the RRM measurement result is less than or equal to the RRM measurement threshold, it indicates that the terminal device is located at the edge cell position of the serving cell.

The not-cell-edge criterion is described below by using an example in which the RRM measurement result is RSRP and RSRQ. The network device may define two threshold values, namely, s-SearchThresholdP and s-SearchThresholdQ, of the not-cell-edge criterion by configuring a cell edge evaluation (cellEdgeEvaluation) parameter to the terminal device. s-SearchThresholdP is a measurement threshold value of the RSRP, and s-SearchThresholdQ is a measurement threshold value of the RSRQ. The terminal device may measure RSRP and RSRQ of the serving cell to obtain a measured value of the RSRP and a measured value of the RSRQ of the serving cell. When the measured value of the RSRP of the serving cell is greater than s-SearchThresholdP and the measured value of the RSRQ is greater than s-SearchThresholdQ, the terminal device meets the not-cell-edge criterion, and the terminal device may perform RRM measurement relaxation.

It should be noted that, in some implementations, s-SearchThresholdP configured by the network device is usually less than SIntraSearchP and SnonIntraSearchP. In some other implementations, s-SearchThresholdQ configured by the network device may be less than SIntraSearchQ and SnonIntraSearchQ.

Certainly, the network device may alternatively configure only one of the parameters s-SearchThresholdP and s-SearchThresholdQ. For example, the network device may configure only s-SearchThresholdP, without configuring s-SearchThresholdQ. In this case, the terminal device may measure only the RSRP of the serving cell. When the measured value of the RSRP of the serving cell is greater than s-SearchThresholdP, the terminal device meets the not-cell-edge criterion, and the terminal device may perform RRM measurement relaxation. For another example, the network device may configure only s-SearchThresholdQ, without configuring s-SearchThresholdP. In this case, the terminal device may measure only the RSRQ of the serving cell. When the measured value of the RSRQ of the serving cell is greater than s-SearchThresholdQ, the terminal device meets the not-cell-edge criterion, and the terminal device may perform RRM measurement relaxation.

The low-mobility criterion is mainly used to determine whether the terminal device is in a low-mobility state. If the terminal device is in the low-mobility state, that is, a position of the terminal device is relatively fixed, the terminal device has a little need for cell reselection, and the terminal device may perform RRM measurement relaxation. If the terminal device is in a high-mobility state, that is, the position of the terminal device changes greatly, the terminal device has a great need for cell reselection, and the terminal device may not perform RRM measurement relaxation.

Whether the terminal device is in the low-mobility state may be determined based on the RRM measurement result of the serving cell. For example, the terminal device may measure the RRM measurement result of the serving cell at different times. If the RRM measurement result of the serving cell changes little at different times, that is, the signal quality of the serving cell is relatively stable, it indicates that the terminal device is in the low-mobility state.

For example, the RRM measurement result is RSRP, the terminal device may measure the RSRP of the serving cell. If the RSRP of the serving cell changes little, it indicates that the terminal device is in the low-mobility state, and the terminal device may perform RRM measurement relaxation.

For the low-mobility criterion, the terminal device may determine whether the low-mobility criterion is met by determining whether low-mobility criterion parameters are met. Currently, the protocol defines two low-mobility criterion parameters: an evaluation duration t-SearchDeltaP and an RRM measurement threshold s-SearchDeltaP. If the RRM measurement result of the serving cell is less than the RRM measurement threshold s-SearchDeltaP within the time t-SearchDeltaP, it indicates that the terminal device meets the low-mobility criterion, and the terminal device may perform RRM measurement relaxation.

In an implementation, when the terminal device meets the low-mobility criterion, the terminal device uses a longer measurement interval when performing RRM measurement on neighboring cells. For example, a fixed scaling factor K may be used to increase the measurement interval.

In another implementation, the low-mobility criterion may be expressed as meeting (SrxlevRef - Srxlev) < s-SearchDeltaP within the time t-SearchDeltaP, where SrxlevRef represents a signal amplitude reference value of the serving cell. Generally, the use of SrxlevRef may follow the following rules.

Rule 1: When the terminal device performs cell selection or cell reselection and the serving cell changes, the terminal device needs to set the signal reference value to the current measured value (that is, Srxlev) of the signal amplitude of the serving cell.

Rule 2: If the signal amplitude of the serving cell is greater than the signal amplitude reference value, that is, (Srxlev - SrxlevRef) > 0, the terminal device needs to set the signal reference value to the current measured value of the signal amplitude of the serving cell.

Rule 3: If the measurement relaxation criterion is not met within the time t-SearchDelta (if the measurement relaxation requirement is not met, the reference value is updated to the current measured value), the terminal device needs to set the signal reference value to the current measured value of the signal amplitude of the serving cell.

If the terminal device is configured with both the not-cell-edge criterion and the low-mobility criterion, the network device may further notify the terminal device of a trigger condition for RRM measurement relaxation, and the terminal device may perform RRM measurement relaxation when the trigger condition is met. The trigger condition may be meeting the not-cell-edge criterion and/or the low-mobility criterion. For example, the network device may indicate a relationship between the not-cell-edge criterion and the low-mobility criterion to the terminal device. For example, the network device may indicate whether the two are in an "and" relationship or an "or" relationship. If the two are in an "and" relationship, it indicates that the terminal device can perform RRM measurement relaxation only when both the not-cell-edge criterion and the low-mobility criterion are met. If the two are in an "or" relationship, it indicates that the terminal device can perform RRM measurement relaxation as long as any one of the criteria (such as the not-cell-edge criterion or the low-mobility criterion) is met.

### Wake-up receiver (WUR)

In order to meet energy-saving requirements of a terminal device, the R18 standards plan to introduce a WUR to receive an energy-saving signal. The WUR features ultra-low cost, ultra-low complexity, and ultra-low power consumption, and it mainly receives an energy-saving signal based on envelope detection. Therefore, a modulation mode, a waveform, and the like of the energy-saving signal received by the WUR are different from those of a signal carried by a PDCCH defined in the existing R16 and R17 standards. The energy-saving signal is mainly an envelope signal that performs ASK modulation on a carrier signal. In some implementations, demodulation of the envelope signal may be accomplished by driving a low-power circuit based on energy provided by a wireless radio frequency signal, and the terminal device does not need to supply power. Therefore, the WUR may be unpowered. In some other implementations, the WUR may also be powered by the terminal device. Regardless of the power supply method, the WUR greatly reduces power consumption compared to a conventional receiver in the terminal device. For example, the WUR can achieve power consumption of less than 1 milliwatt (mw), which is far lower than tens to hundreds of mw power consumption of the conventional receiver.

Currently, the WUR may be combined with the terminal device as an additional module of a receiver of the terminal device. Certainly, the WUR may also be used as a separate module of the terminal device, for example, to implement a wake-up function.

FIG. 2 is a schematic diagram of a terminal device carrying a WUR. Referring to FIG. 2, a terminal device 200 may include a primary receiver 210 and a WUR 220. In order to save power of the terminal device 200, the terminal device 200 may be configured to be in a sleep state (for example, when the terminal device is in a DRX sleep period), or the primary receiver 210 of the terminal device may be in a sleep state. In this case, the terminal device 200 may use the WUR 220 to receive an energy-saving signal. In some cases, if the terminal device 200 needs to wake up the primary receiver 210, the network device may send a wake-up signal (wake-up signal, WUS), and accordingly, the terminal device may monitor the WUS through the WUR 220. When the WUR 220 monitors the WUS, the primary receiver 210 may be waken up. Otherwise, the primary receiver 210 of the terminal device may be in the sleep state.

In some implementations, the WUR monitoring the WUS may include: the WUR monitoring one WUS, or the WUR monitoring a plurality of WUSs.

In some other implementations, the WUR waking up the primary receiver may include: the WUR sending the WUS to the primary receiver, where the WUS is used to wake up the primary receiver, or the WUR sending wake-up indication information to the primary receiver, where the wake-up indication information is used to wake up the primary receiver.

To facilitate distinction, the difference between the WUR and the primary receiver is described below in terms of a modulation mode, a modulation waveform, a transmission rate, a supported bandwidth range, a code rate, or the like.

With respect to modulation modes supported by the two, the complexity of a modulation mode supported by the WUR is lower than that of a modulation mode supported by the primary receiver. In some implementations, the modulation mode supported by the WUR may include one or more of the following modulation modes: amplitude shift keying (amplitude shift keying, ASK), phase shift keying (phase shift keying, PSK), frequency shift keying (frequency shift keying, FSK), and the like. Correspondingly, the modulation mode supported by the primary receiver may include one or more of the following modulation modes: quadrature phase shift keying (quadrature phase shift keying, QPSK), quadrature amplitude modulation (quadrature amplitude modulation, QAM), orthogonal frequency division multiplexing (orthogonal frequency division multiplexing, OFDM), and the like. Certainly, in some other implementations, the primary receiver may also support at least one modulation mode in ASK, PSK, FSK, and the like. This is not specifically limited in embodiments of this application.

With respect to modulation waveforms supported by the two, the complexity of a modulation waveform supported by the WUR is lower than that of a modulation waveform supported by the primary receiver, or in other words, the modulation waveform supported by the WUR is simpler than that supported by the primary receiver. For example, the modulation waveform supported by the WUR may include one or more of the following modulation waveforms: a waveform corresponding to an ASK signal, a waveform corresponding to a PSK signal, and a waveform corresponding to an FSK signal. Correspondingly, the modulation waveform supported by the primary receiver may include one or more of the following modulation waveforms: a waveform corresponding to a QPSK signal, a waveform corresponding to a QAM signal, and a waveform corresponding to an OFDM signal. Certainly, in some embodiments, the modulation waveform supported by the primary receiver may also include a waveform corresponding to one or more of the ASK, PSK, and FSK signals.

With respect to transmission rates supported by the two, a transmission rate supported by the WUR is lower than that supported by the primary receiver. For example, the transmission rate supported by the WUR is less than a first rate threshold, and a value of the first rate threshold may be in the range of 1 Kbps to 1 Mbps, where the value of the first rate threshold may be 1 Kbps, 128 Kbps, 515 Kbps, 1 Mbps, or the like. Correspondingly, the transmission rate supported by the primary receiver may be greater than the first rate threshold. For example, the transmission rate supported by the primary receiver may be greater than 10 Kbps, 100 Kbps, 1000 Kbps, 1 Gbps, or the like.

With respect to bandwidth ranges supported by the two, a bandwidth range supported by the WUR is less than that supported by the primary receiver, or in other words, a bandwidth supported by the WUR is narrower than that supported by the primary receiver. For example, the bandwidth supported by the WUR may be less than or equal to a first bandwidth threshold, and a value of the first bandwidth threshold may be in the range of 1 KB to 1 MB, where the value of the first bandwidth threshold may be 1 KB, 128 KB, 515 KB, 1 MB, or the like. Correspondingly, the bandwidth supported by the primary receiver may be greater than the first bandwidth threshold. For example, the bandwidth supported by the primary receiver may be greater than 10 KB, 100 KB, 1000 KB, 1 GB, or the like.

With respect to code rates supported by the two, a code rate supported by the WUR is lower than that supported by the primary receiver. For example, the code rate supported by the WUR is less than or equal to a first code rate threshold, and the first code rate threshold may range from 0.3 to 0.6. For example, the first code rate threshold may be 0.3, 0.5, or 0.6. Correspondingly, the code rate supported by the primary receiver may be greater than the first code rate threshold. For example, the code rate supported by the primary receiver may be greater than 0.7, 0.8, or 0.9, or may be close to 1.

Currently, in a process of the terminal device performing RRM measurement, the terminal device receives an SSB and/or a CSI-RS through the primary receiver, and obtains an RRM measurement result based on the received SSB and/or CSI-RS. Such an RRM measurement method results in relatively high power consumption required by the terminal device to perform the RRM measurement.

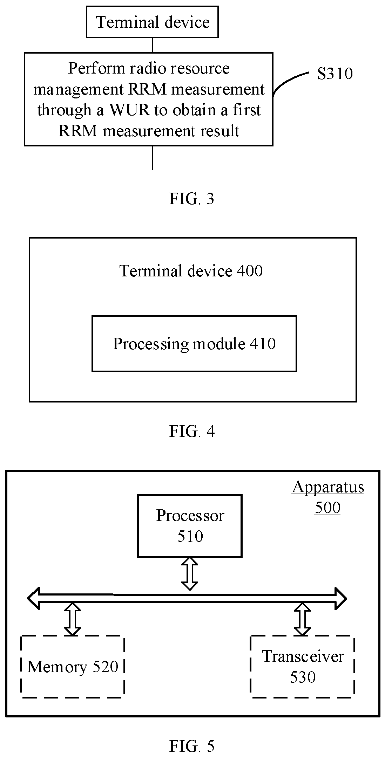

Therefore, in order to avoid the foregoing problem, this application provides a communication method to reduce power consumption when a terminal device performs RRM measurement. A communication method according to an embodiment of this application is described below with reference to FIG. 3.

FIG. 3 is a schematic flowchart of a communication method according to an embodiment of this application. The method shown in FIG. 3 includes step S310.

In step S310, a terminal device performs RRM measurement through a WUR to obtain a first RRM measurement result.

Based on the foregoing description of the WUR, the above step S310 may be replaced by the following: The terminal device performs RRM measurement on a first signal to obtain the first RRM measurement result. In some implementations, a transmission parameter of the first signal is different from that of a synchronization signal and SSB and/or CSI-RS, where the transmission parameter includes one or more of a waveform, a modulation mode, a coding method, and a multiple access method. In some other implementations, the first signal may be the envelope signal described above. In some other implementations, the first signal may be an energy-saving signal (or a WUS) received by the terminal device through the WUR.

In this embodiment of this application, the terminal device performs RRM measurement through the WUR to obtain the first RRM measurement result. Power consumption of the terminal device performing RRM measurement based on the WUR is less than that of the terminal device performing RRM measurement based on a primary receiver. Therefore, the problem of high power consumption required for the terminal device to perform RRM measurement based on the primary receiver in the conventional RRM measurement method is avoided. The solution in this embodiment of this application facilitates reduction of power consumption required by the terminal device to perform RRM measurement.

In other words, in this embodiment of this application, the terminal device performs RRM measurement on the first signal to obtain the first RRM measurement result, where power consumption of the terminal device performing RRM measurement based on the first signal is less than that of the terminal device performing RRM measurement based on the SSB and/or the CSI-RS. Therefore, the problem of high power consumption required for the terminal device to perform RRM measurement based on the SSB and/or the CSI-RS in the conventional RRM measurement method is avoided. The solution in this embodiment of this application facilitates reduction of power consumption required by the terminal device to perform RRM measurement.

However, in some cases, the first RRM measurement result obtained by the terminal device based on the first signal has low accuracy. For example, when the first signal is received through the WUR to perform RRM measurement, the accuracy of the first RRM measurement result may be reduced due to low computing power of the WUR. For example, the RRM measurement result is RSRP. It is assumed that an error range of a result of RRM measurement performed using the primary receiver is [-3 dB, +3 dB], while an error range of a result of RRM measurement performed using the WUR is [-5 dB, +5 dB].

The reduction in the accuracy of the first RRM measurement may cause an error in a subsequent decision made by the terminal device to perform a first operation (for example, cell selection, cell reselection, cell handover, RRM measurement relaxation, beam management, SUL carrier switching, or switching between a 2-step random access procedure and a 4-step random access procedure) based on the first RRM measurement result, causing a failure in normal communication between the terminal device and the network device. The scenario of cell handover of the terminal device is used as an example below to describe the cause of the above problem. It should be noted that the above problem may exist in all of the first operation scenarios described above.

In the scenario of cell handover of the terminal device, if the first RRM measurement result is too large, it means that the first RRM measurement result is greater than an RRM measurement result obtained by the terminal device based on conventional RRM measurement. Moreover, the first RRM measurement result is greater than an RRM measurement threshold, and the RRM measurement result obtained based on the conventional RRM measurement is less than the RRM measurement threshold.

In this case, since the RRM measurement result obtained based on the conventional RRM measurement is less than the RRM measurement threshold, in order to ensure communication quality between the terminal device and the network device, the terminal device originally needs to perform cell handover. However, since the terminal device uses the first RRM measurement result and the first RRM measurement result is greater than the RRM measurement threshold, the terminal device does not perform cell handover. In this case, the communication quality between the terminal device and the network device cannot be ensured.

Therefore, in order to avoid the above problem, in an embodiment of this application, the terminal device may perform the first operation based on the first RRM measurement result, the RRM measurement threshold (also referred to as a first RRM measurement threshold), and a first adjustment parameter. Performing the first operation based on the first RRM measurement result, the RRM measurement threshold (also referred to as the first RRM measurement threshold), and the first adjustment parameter may include: determining whether to perform the first operation based on the first RRM measurement result, the RRM measurement threshold (also referred to as the first RRM measurement threshold), and the first adjustment parameter. Performing the first operation based on the first RRM measurement result, the RRM measurement threshold (also referred to as the first RRM measurement threshold), and the first adjustment parameter may further include: determining a specific manner of performing the first operation based on the first RRM measurement result, the RRM measurement threshold (also referred to as the first RRM measurement threshold), and the first adjustment parameter. For example, the first operation includes cell handover, performing the first operation based on the first RRM measurement result, the RRM measurement threshold (also referred to as the first RRM measurement threshold), and the first adjustment parameter may include: determining a target cell based on the first RRM measurement result, the RRM measurement threshold (also referred to as the first RRM measurement threshold), and the first adjustment parameter.

In some implementations, the first adjustment parameter may be used to adjust the first RRM measurement result, and accordingly, the terminal device may perform the first operation based on the adjusted RRM measurement result (also referred to as a "second measurement result"). For example, when the first RRM measurement result is too large, the first adjustment parameter may be used to reduce the first RRM measurement result. For another example, when the first RRM measurement result is too small, the first adjustment parameter may be used to increase the first RRM measurement result.

As described above, in some cases, the first RRM measurement result may include a plurality of measurement quantities. Accordingly, the first adjustment parameter may include a plurality of adjustment quantities, where different measurement quantities in the plurality of measurement quantities may correspond to different adjustment quantities or a same adjustment quantity in the plurality of adjustment quantities, so as to improve the accuracy of adjusting the first RRM measurement result using the first adjustment parameter. Certainly, the first adjustment parameter may also include only one adjustment quantity, and accordingly, the plurality of measurement quantities are all adjusted based on the same adjustment quantity.

For example, the first RRM measurement result includes four measurement quantities: RSRP1, RSRQ1, RSSI1, and SINR1. Accordingly, the first adjustment parameter may include a plurality of adjustment quantities: Δ_{RSRP} , Δ_{RSRQ}, and Δ_{RSSI} , where Δ_{RSRP} represents an adjustment quantity used to adjust the measurement quantity RSRP, Δ_{RSRQ} represents an adjustment quantity used to adjust the measurement quantity RSRQ, Δ_{RSSI} represents an adjustment quantity used to adjust the measurement quantity RSSI, and Δ_{RSRP} represents an adjustment quantity used to adjust the measurement quantity SINR.

In some other implementations, the first adjustment parameter may be used to adjust the first RRM measurement threshold, and accordingly, the terminal device may perform the first operation based on the adjusted RRM measurement threshold (also referred to as a "second measurement threshold"). For example, when the first RRM measurement result is too large, the first adjustment parameter may be used to increase the first RRM measurement threshold. For another example, when the first RRM measurement result is too small, the first adjustment parameter may be used to reduce the first RRM measurement threshold.

Certainly, in an embodiment of this application, the first adjustment parameter may also be used to adjust both the first RRM measurement result and the first RRM measurement threshold, which is not specifically limited in embodiments of this application. For example, the first adjustment parameter may include an adjustment parameter for the RRM measurement result and an adjustment parameter for the first RRM measurement threshold, so that the first RRM measurement result may be adjusted using the adjustment parameter for the RRM measurement result, and the first RRM measurement threshold may be adjusted using the adjustment parameter for the first RRM measurement threshold. For another example, the first adjustment parameter may include only one adjustment parameter; that is, both the first RRM measurement result and the first RRM measurement threshold may be adjusted using the same adjustment parameter (that is, the first adjustment parameter). For a specific adjustment method, refer to the foregoing description. For brevity, details are not described herein again.

The first adjustment parameter may be a fixed value or a dynamic value, which is not limited in embodiments of this application. In addition, in some implementations, the first adjustment parameter may be an offset. In some other implementations, the first adjustment parameter may also be expressed in the form of a percentage. For example, the first adjustment parameter is 2%; that is, the first RRM measurement result may be increased or reduced by 2%. A specific expression form of the first adjustment parameter is not limited in embodiments of this application.

As described above, when the first RRM measurement result is too large, the terminal device may fail to communicate with the network device, which has great impact on the communications system. When the first RRM measurement result is too small, it is actually not possible to cause excessive impact on the communications system.

For example, in the scenario of cell handover of the terminal device, if the first RRM measurement result is too small, it means that the first RRM measurement result is less than the RRM measurement result obtained by the terminal device based on the conventional RRM measurement. Moreover, the first RRM measurement result is less than the first RRM measurement threshold, and the RRM measurement result obtained based on the conventional RRM measurement is greater than the first RRM measurement threshold.

In this case, since the RRM measurement result obtained based on the conventional RRM measurement is greater than the first RRM measurement threshold, it means that the communication quality between the terminal device and the network device is relatively high, and therefore the terminal device originally does not need to perform cell handover. However, since the terminal device uses the first RRM measurement result and the first RRM measurement result is less than the first RRM measurement threshold, the terminal device performs cell handover. In this case, the terminal device at most performs unnecessary cell handover, which does not cause a failure in normal communication between the terminal device and the network device.

Therefore, in order to reduce the complexity of the above adjustment method based on the first adjustment parameter, the case that the first RRM measurement result is too small may be no longer considered. In other words, regardless of whether the first RRM measurement result is too large or too small in the actual communications system, it is uniformly considered as the first RRM measurement result being too large. That is, the first adjustment parameter is used to reduce the first RRM measurement result and/or the first RRM measurement threshold.

For example, when the first adjustment parameter is an offset value and the offset value is a positive number, the second RRM measurement result is obtained by reducing the first RRM measurement result by the offset, which is expressed as the second RRM measurement result = the first RRM measurement result - Offset.

For another example, when the first adjustment parameter is an offset value and the offset value is a negative number, the second RRM measurement result is obtained by reducing the first RRM measurement result by the offset, which is expressed as the second RRM measurement result = the first RRM measurement result + Offset.

For example, when the first adjustment parameter is an offset value and the offset value is a positive number, the second RRM measurement threshold is obtained by reducing the first RRM measurement threshold by the offset, which is expressed as the second RRM measurement threshold = the first RRM measurement threshold - Offset.

For example, when the first adjustment parameter is an offset value and the offset value is a negative number, the second RRM measurement threshold is obtained by reducing the first RRM measurement threshold by a second offset, which is expressed as the second RRM measurement threshold = the first RRM measurement threshold + Offset.

For a better understanding of this application, a method for adjusting the first RRM measurement result or the first RRM measurement threshold using the first adjustment parameter in different scenarios is described below. It should be noted that in the scenarios described below, determining conditions may be modified using the method of this embodiment of this application; a configuration method of other parameters in the determining conditions may be based on the conventional parameter configuration method, and for brevity, it is not described in detail below.

As described above, in the scenario of intra-frequency measurement, if an RRM measurement result of a serving cell meets Srxlev > SIntraSearchP and Squal > SIntraSearchQ, the terminal device may choose not to perform intra-frequency measurement; otherwise, the terminal device needs to perform intra-frequency measurement. SIntraSearchP and SIntraSearchQ are RRM measurement thresholds.

In some implementations, it is assumed that the first adjustment parameter includes adjustment quantities: delta_RSRP_1 and delta RSRQ_1, and delta_RSRP_1 and delta_RSRQ_1 are positive numbers, where the adjustment quantity delta_RSRP_1 is used to adjust the RRM measurement threshold SIntraSearchP, and the adjustment quantity delta_RSRQ_1 is used to adjust the RRM measurement threshold SIntraSearchQ.

With the method of this embodiment of this application, SIntraSearchP may be adjusted based on delta_RSRP_1 to obtain the adjusted RRM measurement threshold SIntraSearchP_WUR; that is, SIntraSearchP_WUR = SIntraSearchP - delta_RSRP_1.

SIntraSearchQ may be adjusted based on delta_RSRQ_1 to obtain the adjusted RRM measurement threshold SIntraSearchQ_WUR; that is, SIntraSearchQ_WUR = SIntraSearchQ - delta_RSRQ_1.

Accordingly, the criterion in the scenario of intra-frequency measurement may be modified as follows: If the measurement result of the serving cell meets Srxlev > SIntraSearchP_WUR and Squal > SIntraSearchQ_WLTR, the terminal device may choose not to perform intra-frequency measurement; otherwise, the terminal device needs to perform intra-frequency measurement.

In some other implementations, it is assumed that the first adjustment parameter includes adjustment quantities: delta_RSRP_3 and delta_RSRQ_4, and delta_RSRP_3 and delta_RSRQ_4 are positive numbers, where the adjustment quantity delta_RSRP_3 is used to adjust the RRM measurement result Srxlev of the serving cell, and the adjustment quantity delta_RSRQ_4 is used to adjust the RRM measurement result Squal of the serving cell.

With the method of this embodiment of this application, Srxlev may be adjusted based on delta_RSRP_3 to obtain the adjusted RRM measurement result Srxlev_WUR; that is, Srxlev_WUR= Srxlev-delta_RSRP_3.

Squal may be adjusted based on delta_RSRQ_4 to obtain the adjusted RRM measurement result Squal_WUR; that is, Squal_WUR = Squal - delta_RSRQ_4.

Accordingly, the criterion in the scenario of intra-frequency measurement may be modified as follows: If the measurement result of the serving cell meets Srxlev_WUR > SIntraSearchP and Squal_WUR > SIntraSearchQ, the terminal device may choose not to perform intra-frequency measurement; otherwise, the terminal device needs to perform intra-frequency measurement.

As described above, in the scenario of inter-frequency/inter-system measurement, if the RRM measurement result of the serving cell meets Srxlev > SnonIntraSearchP and Squal > SnonIntraSearchQ, the terminal device may choose not to perform inter-frequency/inter-system measurement. Otherwise, the terminal device performs inter-frequency/inter-system measurement. SnonIntraSearchP and SnonIntraSearchQ are RRM measurement thresholds.

In some implementations, it is assumed that the first adjustment parameter includes adjustment quantities: delta_RSRP_5 and delta_RSRQ_6, and delta_RSRP_5 and delta_RSRQ_6 are positive numbers, where the adjustment quantity delta_RSRP_5 is used to adjust the RRM measurement threshold SnonIntraSearchP, and the adjustment quantity delta_RSRQ_6 is used to adjust the RRM measurement threshold SnonIntraSearchQ.

With the method of this embodiment of this application, SnonIntraSearchP may be adjusted based on delta_RSRP_5 to obtain the adjusted RRM measurement threshold SnonIntraSearchP_WUR; that is, SnonIntraSearchP_WUR = SnonIntraSearchP - delta_RSRP_5.

SnonIntraSearchQ may be adjusted based on delta_RSRQ_6 to obtain the adjusted RRM measurement threshold SnonIntraSearchQ_WUR; that is, SnonIntraSearchQ_WUR = SnonIntraSearchQ-delta_RSRQ_6.

Accordingly, the criterion in the scenario of inter-frequency/inter-system measurement may be modified as follows: If the measurement result of the serving cell meets Srxlev > SnonIntraSearchP_WURand Squal > SnonIntraSearchQ_WUR, the terminal device may choose not to perform inter-frequency/inter-system measurement; otherwise, the terminal device needs to perform inter-frequency/inter-system measurement.

In some other implementations, it is assumed that the first adjustment parameter includes adjustment quantities: delta_RSRP_7 and delta_RSRQ_8, and delta_RSRP_7 and delta_RSRQ_8 are positive numbers, where the adjustment quantity delta_RSRP_7 is used to adjust the RRM measurement result Srxlev of the serving cell, and the adjustment quantity delta_RSRQ_8 is used to adjust the RRM measurement result Squal of the serving cell.

With the method of this embodiment of this application, Srxlev may be adjusted based on delta_RSRP_7 to obtain the adjusted RRM measurement result Srxlev_WUR; that is, Srxlev_WUR= Srxlev-delta_RSRP_7.

Squal may be adjusted based on delta_RSRQ_8 to obtain the adjusted RRM measurement result Squal_WUR; that is, Squal_WUR = Squal - delta_RSRQ_8.

Accordingly, the criterion in the scenario of inter-frequency/inter-system measurement may be modified as follows: If the measurement result of the serving cell meets Srxlev_WUR > SnonIntraSearchP and Squal_WUR > SnonIntraSearchQ, the terminal device may choose not to perform inter-frequency/inter-system measurement; otherwise, the terminal device needs to perform inter-frequency/inter-system measurement.

As described above, in the not-cell-edge criterion, if the RRM measurement result of the serving cell meets RSRP > s-SearchThresholdP and RSRQ > s-SearchThresholdQ, the terminal device may perform RRM measurement relaxation. Otherwise, the terminal device cannot perform RRM measurement relaxation. s-SearchThresholdP and s-SearchThresholdQ are RRM measurement thresholds.

In some implementations, it is assumed that the first adjustment parameter includes adjustment quantities: delta_RSRP_9 and delta RSRQ_10, and delta_RSRP_9 and delta RSRQ_10 are positive numbers, where the adjustment quantity delta_RSRP_9 is used to adjust the RRM measurement threshold s-SearchThresholdP, and the adjustment quantity delta_RSRQ_10 is used to adjust the RRM measurement threshold s-SearchThresholdQ.

With the method of this embodiment of this application, s-SearchThresholdP may be adjusted based on delta_RSRP_9 to obtain the adjusted RRM measurement threshold s-SearchThresholdP_WUR; that is, s-SearchThresholdP_WUR = s-SearchThresholdP - delta_RSRP_9.

s-SearchThresholdQ may be adjusted based on delta_RSRQ_10 to obtain the adjusted RRM measurement threshold s-SearchThresholdQ_WUR; that is, s-SearchThresholdQ_WUR = s-SearchThresholdQ - delta_RSRQ_10.

Accordingly, the not-cell-edge criterion may be modified as follows: If the measurement result of the serving cell meets Srxlev > s-SearchThresholdP_WUR and Squal > s-SearchThresholdQ_WUR, the terminal device may choose to perform RRM measurement relaxation; otherwise, the terminal device cannot perform RRM measurement relaxation.

In some other implementations, it is assumed that the first adjustment parameter includes adjustment quantities: delta_RSRP _11 and delta_RSRQ_12, and delta_RSRP _11 and delta_RSRQ_12 are positive numbers, where the adjustment quantity delta_RSRP_11 is used to adjust the RRM measurement result Srxlev of the serving cell, and the adjustment quantity delta_RSRQ_12 is used to adjust the RRM measurement result Squal of the serving cell.

With the method of this embodiment of this application, Srxlev may be adjusted based on delta_RSRP_11 to obtain the adjusted RRM measurement result Srxlev_WUR; that is, Srxlev_WUR= Srxlev-delta_RSRP_11.

Squal may be adjusted based on delta_RSRQ_12 to obtain the adjusted RRM measurement result Squal_WUR; that is, Squal_WUR = Squal - delta_RSRQ_12.

Accordingly, the not-cell-edge criterion may be modified as follows: If the measurement result of the serving cell meets Srxlev_WUR > s-SearchThresholdP and Squal_WUR > s-SearchThresholdQ, the terminal device may choose to perform RRM measurement relaxation; otherwise, the terminal device does not perform RRM measurement relaxation.

It should be noted that, in the not-cell-edge criterion, if the network device configures only the RRM measurement threshold s-SearchThresholdP for the terminal device, without configuring s-SearchThresholdQ, the method of this embodiment of this application may be used only to adjust the RRM measurement threshold s-SearchThresholdQ and/or adjust the RRM measurement result Srxlev. For a specific adjustment method, refer to the foregoing description. For brevity, details are not described herein again.

As described above, in the low-mobility criterion, if the RRM measurement result of the serving cell meets (SrxlevRef - Srxlev) < s-SearchDeltaP within the time t-SearchDeltaP, the terminal device may perform RRM measurement relaxation. Otherwise, the terminal device cannot perform RRM measurement relaxation. s-SearchDeltaP is an RRM measurement threshold, and t-SearchDeltaP is an RRM measurement duration.

In some implementations, it is assumed that the first adjustment parameter includes an adjustment quantity delta_RSRP_13, and delta_RSRP_13 is a positive number, where the adjustment quantity delta_RSRP_13 is used to adjust the RRM measurement threshold s-SearchDeltaP.

With the method of this embodiment of this application, s-SearchDeltaP may be adjusted based on delta_RSRP_13 to obtain the adjusted RRM measurement threshold s-SearchDeltaP _WUR; that is, s-SearchDeltaP_WUR = s-SearchDeltaP - delta_RSRP_13.

Accordingly, the low-mobility criterion may be modified as follows: If the measurement result of the serving cell meets (SrxlevRef- Srxlev) < s-SearchDeltaP_WUR, the terminal device may choose to perform RRM measurement relaxation; otherwise, the terminal device cannot perform RRM measurement relaxation.

In some other implementations, it is assumed that the first adjustment parameter includes an adjustment quantity delta_RSRP_14, and delta_RSRP_14 is a positive number, where the adjustment quantity delta_RSRP_14 is used to adjust the RRM measurement result Srxlev of the serving cell.

With the method of this embodiment of this application, Srxlev may be adjusted based on delta_RSRP_14 to obtain the adjusted RRM measurement result Srxlev_WUR; that is, Srxlev_WUR = Srxlev-delta_RSRP_14.

Accordingly, the low-mobility criterion may be modified as follows: If the measurement result of the serving cell meets (SrxlevRef- Srxlev_WUR) < s-SearchDeltaP, the terminal device may choose to perform RRM measurement relaxation; otherwise, the terminal device does not perform RRM measurement relaxation.

It should be noted that a configuration method of the foregoing parameter SrxlevRef may follow a configuration method of the parameter SrxlevRef in the conventional low-mobility criterion, and for brevity, it is not described in detail herein.

In some other implementations, an evaluation duration in the low-mobility criterion may further be adjusted; or in other words, a second adjustment parameter is used to increase or reduce the evaluation duration in the low-mobility criterion. For example, when the first RRM measurement result is too large, the second adjustment parameter may be used to increase the evaluation duration. For another example, when the first RRM measurement result is too small, the second adjustment parameter may be used to reduce the evaluation duration.

The second adjustment parameter may be a fixed value or a dynamic value, which is not limited in embodiments of this application. In addition, in some implementations, the second adjustment parameter may be an offset. In some other implementations, the second adjustment parameter may also be expressed in the form of a percentage. For example, the second adjustment parameter is 2%; that is, the evaluation duration may be increased or reduced by 2%. A specific expression form of the second adjustment parameter is not limited in embodiments of this application.

As described above, when the first RRM measurement result is too large, the terminal device may fail to communicate with the network device, which has great impact on the communications system. When the first RRM measurement result is too small, it is actually not possible to cause excessive impact on the communications system. Therefore, in order to reduce the complexity of the above adjustment method based on the second adjustment parameter, the case that the first RRM measurement result is too small may be no longer considered. In other words, regardless of whether the first RRM measurement result is too large or too small in the actual communications system, it is uniformly considered as the first RRM measurement result being too large. That is, the second adjustment parameter is used to increase the evaluation duration.

That is, it is assumed that the second adjustment parameter includes an adjustment quantity delta_t-SearchDeltaP_1, and delta_t-SearchDeltaP_1 is a positive number, where the adjustment quantity delta_t-SearchDeltaP_1 is used to adjust the evaluation duration t-SearchDeltaP.

With the method of this embodiment of this application, t-SearchDeltaP may be adjusted based on delta t-SearchDeltaP_1 to obtain the adjusted evaluation duration t-SearchDeltaP _WUR; that is, t-SearchDeltaP_WUR = t-SearchDeltaP + delta_t-SearchDeltaP_1.

Accordingly, the not-cell-edge criterion may be modified as follows: If the RRM measurement result of the serving cell meets (SrxlevRef - Srxlev) < s-SearchDeltaP within the time t-SearchDeltaP _WUR, the terminal device may perform RRM measurement relaxation. Otherwise, the terminal device cannot perform RRM measurement relaxation.

Certainly, the foregoing evaluation duration adjustment method may also be used in combination with the RRM measurement threshold adjustment method, and the not-cell-edge criterion may be modified as follows: If the RRM measurement result of the serving cell meets (SrxlevRef - Srxlev) < s-SearchDeltaP_WUR within the time t-SearchDeltaP _WUR, the terminal device may perform RRM measurement relaxation. Otherwise, the terminal device cannot perform RRM measurement relaxation.

In addition, the foregoing evaluation duration adjustment method may also be used in combination with the RRM measurement result adjustment method, and the not-cell-edge criterion may be modified as follows: If the RRM measurement result of the serving cell meets (SrxlevRef - Srxlev_WUR) < s-SearchDeltaP within the time t-SearchDeltaP _WUR, the terminal device may perform RRM measurement relaxation. Otherwise, the terminal device cannot perform RRM measurement relaxation.

Alternatively, the foregoing evaluation duration adjustment method may also be used in combination with the RRM measurement result adjustment method and the RRM measurement threshold adjustment method, and the not-cell-edge criterion may be modified as follows: If the RRM measurement result of the serving cell meets (SrxlevRef - Srxlev_WUR) < s-SearchDeltaP_WUR within the time t-SearchDeltaP_WUR, the terminal device may perform RRM measurement relaxation. Otherwise, the terminal device cannot perform RRM measurement relaxation.

The method embodiments of this application are described in detail above with reference to FIG. 1 to FIG. 3. Apparatus embodiments of this application are described in detail below with reference to FIG. 4 and FIG. 5. It should be understood that the description of the method embodiments corresponds to the description of the apparatus embodiments, and therefore, for parts that are not described in detail, refer to the foregoing method embodiments.

FIG. 4 is a schematic diagram of a terminal device according to an embodiment of this application. A terminal device 400 shown in FIG. 4 includes a processing unit 410.

The processing unit 410 is configured to perform radio resource management RRM measurement through a wake-up receiver WUR to obtain a first RRM measurement result.

In a possible implementation, the processing unit is further configured to perform a first operation based on the first RRM measurement result, a first RRM measurement threshold, and a first adjustment parameter, where the first operation includes one or more of cell selection, cell reselection, cell handover, RRM measurement relaxation, beam management, supplementary uplink SUL carrier switching, or switching between a 2-step random access procedure and a 4-step random access procedure.

In a possible implementation, the first adjustment parameter is used to adjust the first RRM measurement result.

In a possible implementation, the first adjustment parameter is used to reduce the first RRM measurement result.

In a possible implementation, the processing unit is further configured to perform the first operation based on a second RRM measurement result and the first RRM measurement threshold, where the second RRM measurement result is obtained by adjusting the first RRM measurement result using the first adjustment parameter.

In a possible implementation, the first adjustment parameter is a first offset, and the second RRM measurement result is obtained by reducing the first RRM measurement result by the first offset.

In a possible implementation, the first RRM measurement result includes a plurality of measurement quantities, a first measurement quantity in the plurality of measurement quantities corresponds to the first adjustment parameter in a plurality of adjustment parameters, and different measurement quantities in the plurality of measurement quantities correspond to different adjustment quantities or a same adjustment parameter in the plurality of adjustment parameters.

In a possible implementation, the first adjustment parameter is used to adjust the first RRM measurement threshold.

In a possible implementation, the first adjustment parameter is used to reduce the first RRM measurement threshold.

In a possible implementation, the processing unit is further configured to perform the first operation based on the first RRM measurement result and the second RRM measurement threshold, where the second RRM measurement threshold is obtained by adjusting the first RRM measurement threshold using the first adjustment parameter.

In a possible implementation, the first adjustment parameter is a second offset, and the second RRM measurement threshold is obtained by reducing the first RRM measurement threshold by the second offset.

In a possible implementation, the first RRM measurement threshold is a measurement threshold in a low-mobility criterion, and the processing unit is further configured to perform the first operation based on the first RRM measurement result, the first RRM measurement threshold, the first adjustment parameter, and a second adjustment parameter, where the second adjustment parameter is used to adjust an evaluation duration in the low-mobility criterion.

In a possible implementation, the second adjustment parameter is used to increase the evaluation duration in the low-mobility criterion.

In a possible implementation, the first RRM measurement threshold is a measurement threshold in a low-mobility criterion, and the first adjustment parameter is used to adjust an evaluation duration in the low-mobility criterion.

In a possible implementation, the first adjustment parameter is used to increase the evaluation duration in the low-mobility criterion.

In a possible implementation, the first RRM measurement threshold includes one or more of the following measurement thresholds: an intra-frequency measurement threshold, an inter-frequency/inter-system measurement threshold, a cell reselection threshold, a measurement threshold in a not-cell-edge criterion, and a measurement threshold in a low-mobility criterion.

In a possible implementation, the processing unit is further configured to: monitor a WUS through the WUR; and when the WUR monitors the WUS, wake up a primary receiver through the WUR.

In a possible implementation, a complexity of a modulation mode supported by the WUR is lower than that of a modulation mode supported by the primary receiver; and/or a complexity of a modulation waveform supported by the WUR is lower than that of a modulation waveform supported by the primary receiver; and/or a transmission rate supported by the WUR is lower than that supported by the primary receiver; and/or a bandwidth range supported by the WUR is less than that supported by the primary receiver; and/or a code rate supported by the WUR is lower than that supported by the primary receiver.

FIG. 5 is a schematic diagram of a structure of a communications apparatus according to an embodiment of this application. The dashed line in FIG. 5 indicates that the unit or module is optional. The apparatus 500 may be configured to implement the methods described in the foregoing method embodiments. The apparatus 500 may be a chip, a terminal device, or a network device.

The apparatus 500 may include one or more processors 510. The processor 510 may allow the apparatus 500 to implement the methods described in the foregoing method embodiments. The processor 510 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 500 may further include one or more memories 520. The memory 520 stores a program, where the program may be executed by the processor 510, to cause the processor 510 to perform the methods described in the foregoing method embodiments. The memory 520 may be independent of the processor 510 or may be integrated into the processor 510.

The apparatus 500 may further include a transceiver 530. The processor 510 may communicate with another device or chip through the transceiver 530. For example, the processor 510 may send data to and receive data from another device or chip through the transceiver 530.

An embodiment of this application further provides a computer-readable storage medium for storing a program. The computer-readable storage medium may be applied to a terminal or a network device provided in embodiments of this application, and the program causes a computer to perform the methods to be performed by the terminal or the network device in various embodiments of this application.

An embodiment of this application further provides a computer program product. The computer program product includes a program. The computer program product may be applied to a terminal or a network device provided in embodiments of this application, and the program causes a computer to perform the methods to be performed by the terminal or the network device in various embodiments of this application.

An embodiment of this application further provides a computer program. The computer program may be applied to a terminal or a network device provided in embodiments of this application, and the computer program causes a computer to perform the methods to be performed by the terminal or the network device in various embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and drawings of this application are used for distinguishing different objects from each other, rather than defining a specific order. In addition, the terms "include" and "have" and any variations thereof are intended to cover a non-exclusive inclusion.

In embodiments of this application, the "indication" mentioned may be a direct indication or an indirect indication, or indicate an association. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that determining B based on A does not mean determining B based on only A, but instead B may be determined based on A and/or other information.

In embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "predefining" or "preconfiguring" can be implemented by prestoring corresponding code or a corresponding table in a device (for example, including a terminal device and a network device) or in other manners that can be used for indicating related information. A specific implementation thereof is not limited in this application. For example, predefining may indicate being defined in a protocol.

In embodiments of this application, the "protocol" may indicate a standard protocol in the communication field, which may include, for example, an LTE protocol, an NR protocol, and a related protocol applied to a future communications system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of the embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
performing, by a terminal device, radio resource management RRM measurement through a wake-up receiver WUR to obtain a first RRM measurement result.

2. The method according to claim 1, wherein the method further comprises:
performing, by the terminal device, a first operation based on the first RRM measurement result, a first RRM measurement threshold, and a first adjustment parameter,
wherein the first operation comprises one or more of cell selection, cell reselection, cell handover, RRM measurement relaxation, beam management, supplementary uplink SUL carrier switching, or switching between a 2-step random access procedure and a 4-step random access procedure.

3. The method according to claim 2, wherein the first adjustment parameter is used to adjust the first RRM measurement result.

4. The method according to claim 2 or 3, wherein the first adjustment parameter is used to reduce the first RRM measurement result.

5. The method according to claim 3 or 4, wherein the determining, by the terminal device, whether to perform a first operation based on the first RRM measurement result, a first RRM measurement threshold, and a first adjustment parameter comprises:
determining, by the terminal device, whether to perform the first operation based on a second RRM measurement result and the first RRM measurement threshold, wherein the second RRM measurement result is obtained by adjusting the first RRM measurement result using the first adjustment parameter.

6. The method according to claim 5, wherein the first adjustment parameter is a first offset, and the second RRM measurement result is obtained by reducing the first RRM measurement result by the first offset.

7. The method according to any one of claims 2 to 6, wherein the first RRM measurement result comprises a plurality of measurement quantities, a first measurement quantity in the plurality of measurement quantities corresponds to the first adjustment parameter in a plurality of adjustment parameters, and different measurement quantities in the plurality of measurement quantities correspond to different adjustment parameters or a same adjustment parameter in the plurality of adjustment parameters.

8. The method according to claim 2, wherein the first adjustment parameter is used to adjust the first RRM measurement threshold.

9. The method according to claim 2 or 8, wherein the first adjustment parameter is used to reduce the first RRM measurement threshold.

10. The method according to claim 8 or 9, wherein the performing, by the terminal device, a first operation based on the first RRM measurement result, a first RRM measurement threshold, and a first adjustment parameter comprises:
performing, by the terminal device, the first operation based on the first RRM measurement result and the second RRM measurement threshold, wherein the second RRM measurement threshold is obtained by adjusting the first RRM measurement threshold using the first adjustment parameter.

11. The method according to claim 10, wherein the first adjustment parameter is a second offset, and the second RRM measurement threshold is obtained by reducing the first RRM measurement threshold by the second offset.

12. The method according to any one of claims 8 to 11, wherein the first RRM measurement threshold is a measurement threshold in a low-mobility criterion, and the performing, by the terminal device, a first operation based on the first RRM measurement result, a first RRM measurement threshold, and a first adjustment parameter comprises:
performing, by the terminal device, the first operation based on the first RRM measurement result, the first RRM measurement threshold, the first adjustment parameter, and a second adjustment parameter, wherein the second adjustment parameter is used to adjust an evaluation duration in the low-mobility criterion.

13. The method according to claim 12, wherein the second adjustment parameter is used to increase the evaluation duration in the low-mobility criterion.

14. The method according to claim 2, wherein the first RRM measurement threshold is a measurement threshold in a low-mobility criterion, and the first adjustment parameter is used to adjust an evaluation duration in the low-mobility criterion.

15. The method according to claim 14, wherein the first adjustment parameter is used to increase the evaluation duration in the low-mobility criterion.

16. The method according to any one of claims 2 to 11, wherein the first RRM measurement threshold comprises one or more of following measurement thresholds: an intra-frequency measurement threshold, an inter-frequency/inter-system measurement threshold, a cell reselection threshold, a measurement threshold in a not-cell-edge criterion, and a measurement threshold in a low-mobility criterion.

17. The method according to any one of claims 1 to 16, wherein the method further comprises:
monitoring, by the terminal device, a WUS through the WUR; and
when the WUR monitors the WUS, waking up, by the terminal device, a primary receiver through the WUR.

18. The method according to claim 17, wherein a complexity of a modulation mode supported by the WUR is lower than that of a modulation mode supported by the primary receiver; and/or
a complexity of a modulation waveform supported by the WUR is lower than that of a modulation waveform supported by the primary receiver; and/or
a transmission rate supported by the WUR is lower than that supported by the primary receiver; and/or
a bandwidth range supported by the WUR is less than that supported by the primary receiver; and/or
a code rate supported by the WUR is lower than that supported by the primary receiver.

19. A terminal device, comprising:
a processing unit, configured to perform radio resource management RRM measurement through a wake-up receiver WUR to obtain a first RRM measurement result.

20. The terminal device according to claim 19, wherein
the processing unit is further configured to perform a first operation based on the first RRM measurement result, a first RRM measurement threshold, and a first adjustment parameter,
wherein the first operation comprises one or more of cell selection, cell reselection, cell handover, RRM measurement relaxation, beam management, supplementary uplink SUL carrier switching, or switching between a 2-step random access procedure and a 4-step random access procedure.

21. The terminal device according to claim 20, wherein the first adjustment parameter is used to adjust the first RRM measurement result.

22. The terminal device according to claim 20 or 21, wherein the first adjustment parameter is used to reduce the first RRM measurement result.

23. The terminal device according to claim 21 or 22, wherein the processing unit is further configured to:
perform the first operation based on a second RRM measurement result and the first RRM measurement threshold, wherein the second RRM measurement result is obtained by adjusting the first RRM measurement result using the first adjustment parameter.

24. The terminal device according to claim 23, wherein the first adjustment parameter is a first offset, and the second RRM measurement result is obtained by reducing the first RRM measurement result by the first offset.

25. The terminal device according to any one of claims 20 to 24, wherein the first RRM measurement result comprises a plurality of measurement quantities, a first measurement quantity in the plurality of measurement quantities corresponds to the first adjustment parameter in a plurality of adjustment parameters, and different measurement quantities in the plurality of measurement quantities correspond to different adjustment parameters or a same adjustment parameter in the plurality of adjustment parameters.

26. The terminal device according to claim 20, wherein the first adjustment parameter is used to adjust the first RRM measurement threshold.

27. The terminal device according to claim 20 or 26, wherein the first adjustment parameter is used to reduce the first RRM measurement threshold.

28. The terminal device according to claim 26 or 27, wherein the processing unit is further configured to:
perform the first operation based on the first RRM measurement result and the second RRM measurement threshold, wherein the second RRM measurement threshold is obtained by adjusting the first RRM measurement threshold using the first adjustment parameter.

29. The terminal device according to claim 28, wherein the first adjustment parameter is a second offset, and the second RRM measurement threshold is obtained by reducing the first RRM measurement threshold by the second offset.

30. The terminal device according to any one of claims 26 to 29, wherein the first RRM measurement threshold is a measurement threshold in a low-mobility criterion, and the processing unit is further configured to:
perform the first operation based on the first RRM measurement result, the first RRM measurement threshold, the first adjustment parameter, and a second adjustment parameter, wherein the second adjustment parameter is used to adjust an evaluation duration in the low-mobility criterion.

31. The terminal device according to claim 30, wherein the second adjustment parameter is used to increase the evaluation duration in the low-mobility criterion.

32. The terminal device according to claim 20, wherein the first RRM measurement threshold is a measurement threshold in a low-mobility criterion, and the first adjustment parameter is used to adjust an evaluation duration in the low-mobility criterion.

33. The terminal device according to claim 32, wherein the first adjustment parameter is used to increase the evaluation duration in the low-mobility criterion.

34. The terminal device according to any one of claims 20 to 29, wherein the first RRM measurement threshold comprises one or more of following measurement thresholds: an intra-frequency measurement threshold, an inter-frequency/inter-system measurement threshold, a cell reselection threshold, a measurement threshold in a not-cell-edge criterion, and a measurement threshold in a low-mobility criterion.

35. The terminal device according to any one of claims 20 to 34, wherein the processing unit is further configured to:
monitor a WUS through the WUR; and
when the WUR monitors the WUS, wake up a primary receiver through the WUR.

36. The terminal device according to claim 35, wherein a complexity of a modulation mode supported by the WUR is lower than that of a modulation mode supported by the primary receiver; and/or
a complexity of a modulation waveform supported by the WUR is lower than that of a modulation waveform supported by the primary receiver; and/or
a transmission rate supported by the WUR is lower than that supported by the primary receiver; and/or
a bandwidth range supported by the WUR is less than that supported by the primary receiver; and/or
a code rate supported by the WUR is lower than that supported by the primary receiver.

37. A terminal, comprising a memory and a processor, wherein the memory is configured to store a program, and the processor is configured to invoke the program in the memory to perform the method according to any one of claims 1 to 18.

38. An apparatus, comprising a processor configured to invoke a program from a memory to perform the method according to any one of claims 1 to 18.

39. A chip, comprising a processor configured to invoke a program from a memory to cause a device installed with the chip to perform the method according to any one of claims 1 to 18.

40. A computer-readable storage medium, wherein the computer-readable storage medium stores a program, and the program causes a computer to perform the method according to any one of claims 1 to 18.

41. A computer program product, comprising a program, wherein the program causes a computer to perform the method according to any one of claims 1 to 18.

42. A computer program, wherein the computer program causes a computer to perform the method according to any one of claims 1 to 18.
